# EUROPEAN PATENT SPECIFICATION

(11) **EP 4 286 760 B1**
(45) Date of publication and mention of the grant of the patent: **21.01.2026**
(21) Application number: 21922752.7
(22) Date of filing: 26.01.2021
(51) Int. Cl.: G05B 15/02, G05B 19/418, F24F 11/52, F24F 11/58

(54) **REMOTE MONITORING SYSTEM AND REMOTE MONITORING METHOD**
FERNÜBERWACHUNGSSYSTEM UND FERNÜBERWACHUNGSVERFAHREN
SYSTÈME DE SURVEILLANCE À DISTANCE ET PROCÉDÉ DE SURVEILLANCE À DISTANCE

(43) Date of publication of application: 06.12.2023
(73) Proprietor: MITSUBISHI ELECTRIC CORPORATION, Chiyoda-ku Tokyo 100-8310 (JP)
(72) Inventor: TAKETANI, Yuto, Tokyo 100-8310 (JP); SAKAGUCHI, Hiroaki, Tokyo 100-8310 (JP); SATO, Yasushi, Tokyo 100-8310 (JP); BANDO, Yuhei, Tokyo 100-8310 (JP); OKURA, Kenichiro, Tokyo 100-8310 (JP); YAMAGUCHI, Kazushi, Tokyo 100-8310 (JP)
(74) Representative: Witte, Weller & Partner Patentanwälte mbB
(86) International application number: PCT/JP2021/002617
(87) International publication number: WO 2022/162728

(56) References cited:
- WO-A1-2016/208223
- WO-A1-2017/104059
- JP-A- 2008 151 443
- JP-A- 2019 211 882
- JP-B1- 6 028 174
- US-A1- 2009 287 322
- US-A1- 2015 184 880
- US-A1- 2017 307 246
- US-A1- 2020 370 772
- US-A1- 2021 018 203

## Description

### TECHNICAL FIELD

The present invention relates to a remote monitoring system and a remote monitoring method.

### BACKGROUND ART

JP 2018-35957 A discloses an air-conditioning system in which an air-conditioner and peripheral devices are controlled by a processor of a cloud server. In this air-conditioning system, since the processor of the cloud server sufficiently higher in processing performance than a microcomputer is used for control, the air-conditioning system can achieve more complicated control than the microcomputer relatively low in processing performance.

### SUMMARY OF INVENTION

### TECHNICAL PROBLEM

As IoT (Internet of Things) devices have increasingly widely been used in recent years, an air-conditioner can be connected to a cloud server to enable control of air-conditioning and data collection from a remote location. According to the technique disclosed in JP 2018-35957 A, a control unit and a storage of the air-conditioner use resources on the cloud. Owing to use of the resources on the cloud, performance of a terminal apparatus can be low, which can lead to lower pricing of products. In addition, as compared with a conventional product in which the control unit and the storage are incorporated, ample resources can advantageously be used. Collection of data indicating an operating state of an air-conditioner with the use of such a cloud server has also been studied.

In order to connect the cloud server and the air-conditioner to each other, however, use of a network is indispensable. If the cloud server or the network fails, operation data or the like of the air-conditioner may not be collected.

Collected operation data expressed in numerical values is difficult for a user to understand as it is. A terminal possessed by the user, however, is often low in performance for showing the operation data in an easy-to-see manner.

US 2021/0018203 A1, which forms the basis for the preamble of claims 1 and 13, discloses a failure diagnosis system that diagnoses the state of an air-conditioning apparatus having a refrigerant circuit in which refrigerant circulates. The failure diagnosis system has an abnormality diagnosis unit that performs normal-operation abnormality diagnosis for determining whether or not there is an abnormality in the air-conditioning apparatus by using state data and control data during normal operation of the air-conditioning apparatus. If the abnormality diagnosis unit determines that there is an abnormality in the air-conditioning apparatus, the abnormality diagnosis unit changes a control value for an actuator of the air-conditioning apparatus and acquires state data and control data. Then, the abnormality diagnosis unit performs abnormality-cause identification diagnosis for identifying the cause of the abnormality in the air-conditioning apparatus by using the state data and the control data acquired before the change of the control value and the state data and the control data acquired after the change of the control value.

US 2009/0287322 A1 discloses an instrumentation control system, including: a first field device; and a second field device coupled to the first field device via a fieldbus. The first field device includes: a transmitting buffer to store data to be transmitted; a transmitter; and an inquiry processing section to cause the transmitter to retransmit the data stored in the transmitting buffer to the second field device in response to a request from the second field device. The second field device includes: a receiving buffer to store the data transmitted from the first field device; a checking section to determine whether the data stored in the receiving buffer is normal or not, and to make a data retransmission request to the first field device if the data stored in the receiving buffer is not normal; and a processing unit to perform predetermined processing based on the data which is determined to be normal.

The present invention was made to solve problems as above, and an object thereof is to provide a remote monitoring system capable of preventing a record of data indicating an operating state of an air-conditioner from missing.

Another object of the present invention is to provide a remote monitoring system and a remote monitoring method capable of presenting collected operation data in a manner easy for a user to understand, by making use of performance of a server connected to an air-conditioner.

### SOLUTION TO PROBLEM

The present invention relates to a remote monitoring system according to claim 1 to monitor an operating state of an air-conditioner. The remote monitoring system includes a storage device mounted on the air-conditioner or a remote monitoring apparatus to monitor the air-conditioner, the storage device being configured to record the operating state for a first period of the air-conditioner, a communication control unit mounted on the air-conditioner or the remote monitoring apparatus, the communication control unit transmitting the operating state stored in the storage device, and a server configured to communicate with the communication control unit over a network and to obtain the operating state from the storage device. The communication control unit is configured to a) transmit to the server, when there is no missing portion in the operating state obtained by the server from the storage device until now, the operating state newly recorded in the storage device after previous transmission of the operating state, and to b) transmit to the server, when there is a missing portion in the operating state obtained by the server from the storage device until now, the operating state newly recorded after previous transmission of the operating state and the missing portion that remains in the storage device.

The present invention further relates to a remote monitoring method according to claim 13.

### ADVANTAGEOUS EFFECTS OF INVENTION

According to the remote monitoring system and the remote monitoring method of the present invention, the operating state of the air-conditioner can be recorded without loss. According to the remote monitoring system of the present invention, collected operation data can be presented to a user in a manner easy to understand.

### BRIEF DESCRIPTION OF DRAWINGS

Fig. 1 is a block diagram showing one exemplary configuration of a remote monitoring system according to the present embodiment.
Fig. 2 is a diagram for illustrating a configuration of a network server and a capacity of an area where operation data is stored.
Fig. 3 is a diagram for illustrating a procedure for starting collection of operation data when a remote monitoring apparatus is installed.
Fig. 4 is a diagram for illustrating suspension and resumption of collection of operation data.
Fig. 5 is a diagram for illustrating generation and presentation of an image of a refrigerant circuit diagram.
Fig. 6 is a diagram showing a first exemplary image of a generated refrigerant circuit diagram.
Fig. 7 is a diagram showing a second exemplary image of a generated refrigerant circuit diagram.
Fig. 8 is a perspective view showing an appearance of the remote monitoring apparatus.
Fig. 9 is a cross-sectional view along the IX-IX cross-section in Fig. 8.
Fig. 10 is a perspective view showing an appearance after a resin cover is removed in Fig. 8.
Fig. 11 is a diagram for illustrating a communication path in the remote monitoring system.

### DESCRIPTION OF EMBODIMENTS

An embodiment of the present invention will be described in detail below with reference to the drawings. Though a plurality of embodiments will be described below, combination of features described in the embodiments as appropriate is originally intended. The same or corresponding elements in the drawings have the same reference characters allotted and description thereof will not be repeated. Relation in size of constituent members in the drawings below may be different from actual relation in size.

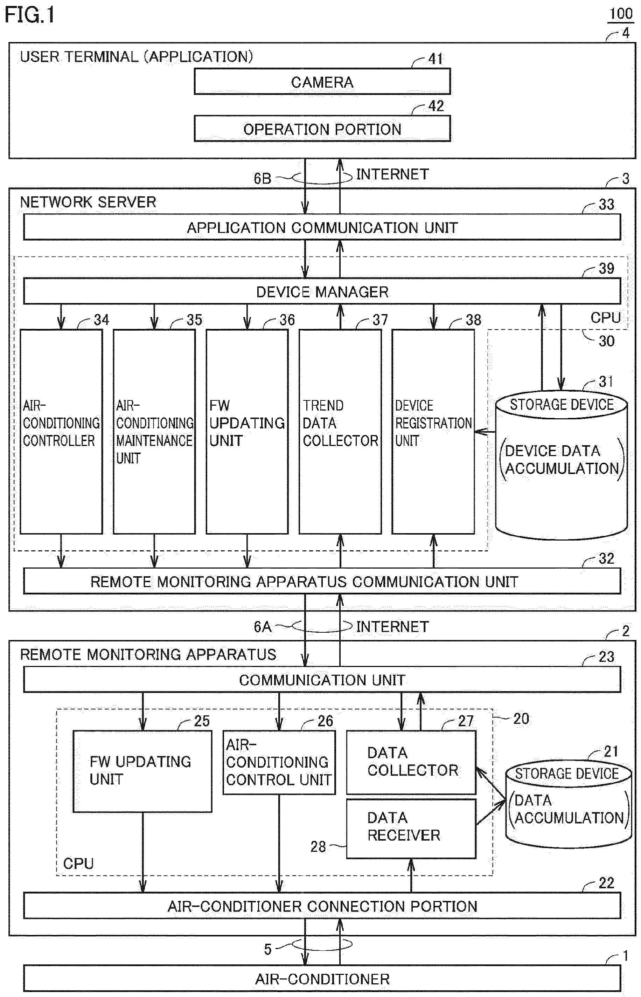

Fig. 1 is a block diagram showing one exemplary configuration of a remote monitoring system according to the present embodiment. A remote monitoring system 100 includes a remote monitoring apparatus 2 and a network server 3.

Remote monitoring apparatus 2 is connected to an air-conditioner 1 through a dedicated communication line 5 to collect operation data of air-conditioner 1 and control air-conditioner 1.

Network server 3 is connected to remote monitoring apparatus 2 and a user terminal 4 over the Internet 6A and 6B. The operation data of air-conditioner 1 collected by remote monitoring apparatus 2 is accumulated in network server 3. The operation data includes, for example, data indicating operations onto a remote controller such as time of start and end of operations of air-conditioner 1, change in temperature setting, and switching between cooling and heating operations as well as data indicating a state of air-conditioner 1 such as a temperature and a pressure measured by sensors provided in a refrigerant pipe and the like.

Network server 3 transmits control information for air-conditioner 1 received from user terminal 4 to remote monitoring apparatus 2. Remote monitoring apparatus 2 controls air-conditioner 1 based on this control information. Network server 3 may be connected to an application server operated by a maintenance provider instead of user terminal 4.

Remote monitoring apparatus 2 includes a central processing unit (CPU) 20, a storage device (a read only memory (ROM), a random access memory (RAM), a hard disk, and the like) 21, an air-conditioner connection portion 22, and a communication unit 23.

CPU 20 develops a program stored in the ROM on the RAM or the like to execute the program. The program stored in the ROM is a program where a processing procedure for operations as remote monitoring apparatus 2 is described. CPU 20 performs processing as an FW updating unit 25, an air-conditioning control unit 26, a data collector 27, and a data receiver 28 in accordance with the program. Though FW updating unit 25, air-conditioning control unit 26, data collector 27, and data receiver 28 may be implemented by a single control unit controlled by the same CPU as shown in Fig. 1, they may be implemented by separate control units controlled by different CPUs.

FW updating unit 25 downloads new firmware from network server 3. When the downloaded firmware is firmware for the remote monitoring apparatus, FW updating unit 25 applies the firmware to remote monitoring apparatus 2 itself. When the downloaded firmware is firmware for the air-conditioner, FW updating unit 25 transfers the firmware to air-conditioner 1.

When air-conditioning control unit 26 receives a control command (temperature setting, airflow rate setting, or the like) for air-conditioner 1 from network server 3, air-conditioning control unit 26 converts the control command to a dedicated communication protocol for air-conditioner 1 and transmits the resultant command to air-conditioner 1.

When data receiver 28 receives operation data from air-conditioner 1, it has the operation data stored in storage device 21. Operation data for five days at the maximum of air-conditioner 1 can be accumulated in storage device 21.

Data collector 27 periodically retrieves operation data of air-conditioner 1 from storage device 21 which is a database of the remote monitoring apparatus, and transmits the operation data to network server 3.

Network server 3 includes a central processing unit (CPU) 30, a storage device (a read only memory (ROM), a random access memory (RAM), a hard disk, and the like) 31, a remote monitoring apparatus communication unit 32, and an application communication unit 33.

CPU 30 develops a program stored in the ROM on the RAM or the like to execute the program. The program stored in the ROM is a program where a processing procedure for operations as network server 3 is described. CPU 30 performs processing as an air-conditioning controller 34, an air-conditioning maintenance unit 35, an FW updating unit 36, a trend data collector 37, a device registration unit 38, and a device manager 39 in accordance with the program. Though air-conditioning controller 34, air-conditioning maintenance unit 35, FW updating unit 36, trend data collector 37, device registration unit 38, and device manager 39 may be implemented by a single control unit controlled by the same CPU as shown in Fig. 1, they may be implemented by separate control units controlled by different CPUs. Network server 3 may be implemented by a plurality of servers arranged as being distributed on the Internet.

Remote monitoring system 100 further includes user terminal 4. Application communication unit 33 communicates with user terminal 4 over the Internet 6B. For example, a personal computer, a tablet terminal, a smartphone, or the like can be used as user terminal 4. Application software is installed in user terminal 4. The application software obtains various parameters of air-conditioner 1 from network server 3 and has the parameters shown on a display of user terminal 4. The application software may be a web application, a client that runs on an operating system (OS), or combination of a second network server and a web browser. Network server 3 may be connected to an application server operated by a maintenance provider instead of user terminal 4, and the maintenance provider may monitor various parameters of air-conditioner 1 on the application server.

Device manager 39 performs a function not to allow a user to control a remote monitoring apparatus used by another user. Information (device data) specific to remote monitoring apparatus 2 is accumulated in storage device 31.

Air-conditioning controller 34 manages a setting temperature and an operation mode of air-conditioner 1. Air-conditioning controller 34 can manage control in correspondence with an annexed remote controller of air-conditioner 1. Air-conditioning maintenance unit 35 performs a function used by a worker in installation of air-conditioner 1 as well as a function to diagnose a failure and a function to generate a refrigerant circuit diagram that are used by a serviceperson.

FW updating unit 36 performs a function to transmit and manage firmware of remote monitoring apparatus 2 and firmware of air-conditioner 1.

Trend data collector 37 collects an amount of power consumption by air-conditioner 1 and operation data (transitive information such as a setting temperature and an operation mode) in constant cycles from remote monitoring apparatus 2.

Device registration unit 38 performs a function to register remote monitoring apparatus 2 in network server 3.

Remote monitoring apparatus communication unit 32 communicates with remote monitoring apparatus 2 over the Internet 6A. Remote monitoring apparatus communication unit 32 is distinguished from application communication unit 33, and user terminal 4 cannot directly be connected to remote monitoring apparatus 2.

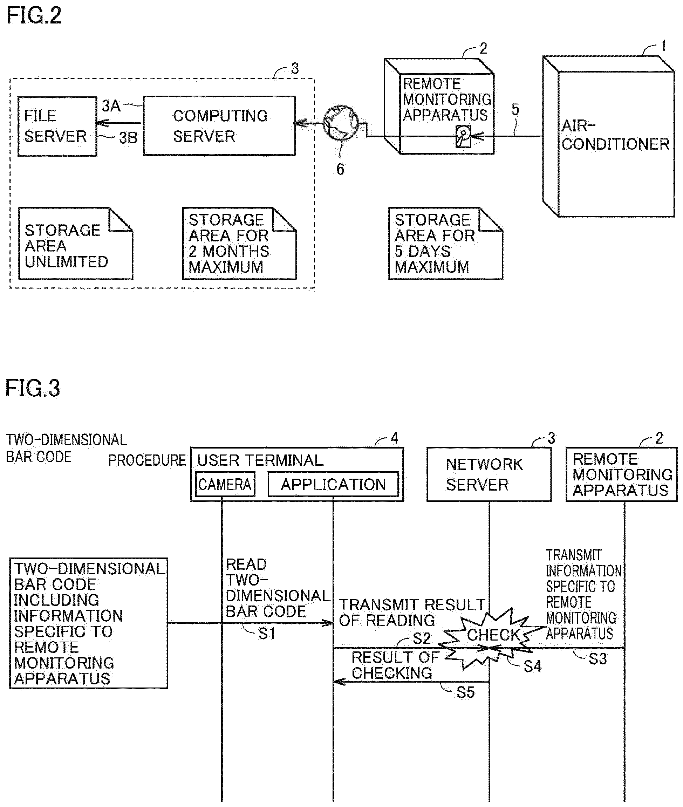

Fig. 2 is a diagram for illustrating a configuration of the network server and a capacity of an area where operation data is stored. Remote monitoring apparatus 2 includes storage device 21 including an area where operation data for five days at the maximum is stored.

In remote monitoring apparatus 2, a communication log including operation data of air-conditioner 1 is constantly stored in storage device 21, and when operation data for five days at the maximum is stored, the operation data is erased sequentially by overwrite of the operation data older than the operation data for five days.

Though network server 3 may be implemented by a single server, it is implemented, for example, by a computing server 3A and a file server 3B.

Remote monitoring apparatus 2 periodically communicates with computing server 3A. Remote monitoring apparatus 2 uploads to computing server 3A, a difference between stored operation data for five days and operation data stored at the time when communication was previously successful. Consequently, when communication is cut off, operation data that should have been sent at the time of failure in communication will be transmitted together in next communication. It takes, for example, approximately one minute for uploading.

Computing server 3A includes a storage including an area for storage, for example, for two months at the maximum. Computing server 3A is a buffering server where operation data is temporarily stored, and operation data transmitted from remote monitoring apparatus 2 in constant cycles is buffered therein. Since data is transmitted to the server in constant cycles, cost for communication can be lower than in transmission for each time of generation of the difference.

In file server 3B, a substantially unlimited storage area can be secured as necessary, and a usage fee is charged on a usage basis in accordance with a used capacity. Computing server 3A uploads to file server 3B, a difference between data accumulated for five days and data transmitted on a previous day, for example, at 0 o'clock every day.

Though operation data is transmitted any time from remote monitoring apparatus 2 to network server 3, a situation where communication fails for several days may occur approximately once a year due to failure of the network managed by a provider or the like.

Thus, when the Internet 6A over which remote monitoring apparatus 2 to monitor air-conditioner 1 and network server 3 are connected to each other shuts down due to failure, a part of operation data of air-conditioner 1 held in network server 3 is missing.

A ratio of collection of data should be equal to or higher than a certain level in order to determine whether or not air-conditioner 1 satisfies an energy saving standard. Depending on a ratio of loss of operation data, the ratio of collection may become low and accuracy in determination may become poor.

In the present embodiment, operation data of the air-conditioner for a certain period is locally stored and remote monitoring apparatus 2 periodically transmits backup to network server 3 on the cloud. For example, operation data of air-conditioner 1 sent periodically (every ten minutes) from air-conditioner 1 to remote monitoring apparatus 2 is stored in the storage device of remote monitoring apparatus 2 as one operation data file. When there is no response from network server 3 at transmission timing due to shut-down of the network, remote monitoring apparatus 2 causes failure in transmission and file information such as a name of an unsuccessfully transmitted file to be stored in storage device 21 in association with each other as transmission failure history information. Then, at next transmission timing, remote monitoring apparatus 2 refers to the transmission failure history information to identify the operation data file that could not be transmitted, and transmits the operation data file and a newly generated operation data file together. At that time, when network shut-down lasts for a long time, the transmission failure history information is accumulated in the storage device and there may be a plurality of operation data files that could not be transmitted at next transmission timing. Network server 3 may detect, by checking time included in the operation data, a missing part of the operation data due to failure at the time of shut-down of the network. In that case, network server 3 may wait for recovery of the network and request remote monitoring apparatus 2 to transmit again operation data only for the missing part.

Thus, data at the time of occurrence of the failure can be sent to the server without loss. As the ratio of collection of operation data improves, performance of air-conditioner 1 can accurately be evaluated. In addition, as the ratio of collection of operation data improves, accuracy in analysis of a cause of failure based on comparison between normal operation data at the time of introduction and data at the time of failure also improves.

In the case of an air-conditioner not connected to a network, a storage capacity of a storage device of a monitoring apparatus has been limited, and operation data only for several months has conventionally been stored. Since a frequency of writing is high, a storage area in the storage device may physically be broken. In an example where a maintenance serviceperson stores back-up operation data once a month, operation data for a month within which the storage device failed is entirely lost.

In the present embodiment, as operation data is periodically transmitted to network server 3, past data can be erased from remote monitoring apparatus 2. Therefore, even when monitoring continues, the capacity of storage device 21 of remote monitoring apparatus 2 does not become scarce. Since the storage capacity available in network server 3 can be secured as necessary with the use of file server 3B, operation data, for example, for ten or fifteen years can be stored.

Remote monitoring apparatus 2 is connected to network server 3 over the Internet 6A and the difference is periodically (for example, every ten minutes) transferred. Therefore, even when storage device 21 of remote monitoring apparatus 2 fails, only little operation data is lost because data until data immediately before the failure has been stored in network server 3. By replacement of storage device 21 of remote monitoring apparatus 2 quickly after occurrence of the failure, the ratio of data collection necessary for accurate evaluation of the air-conditioner is highly likely to be satisfied.

Furthermore, in the present embodiment, even when network server 3 and remote monitoring apparatus 2 are temporarily not able to communicate with each other due to a network error or the like, collected data for five days at the maximum is stored in remote monitoring apparatus 2. Therefore, if data in remote monitoring apparatus 2 can be transferred to network server 3 before it is erased, loss of data can be prevented. In the present embodiment, remote monitoring apparatus 2 transmits an operating state to network server 3 at time intervals (for example, ten minutes) shorter than a first period (for example, five days) and checks whether or not it receives a response from the network server after the transmission. Remote monitoring apparatus 2 is configured to determine transmission of operation data as having failed when there is no response from the network server, and to transmit at next transmission timing, the unsuccessfully transmitted operation data as being added to new operation data. Specifically, a difference between operation data stored at the time point of latest successful communication and operation data that has been stored by the current time point should only be transmitted.

In the case of usual network shut-down, operation data can thus be collected without loss in network server 3 arranged at a remote location. Regarding measures against usual network shut-down, recovery in one or two days from the shut-down is expected, and hence the capacity of storage device 21 of remote monitoring apparatus 2 for five days will suffice.

Though storage device 21 where operation data or the like of air-conditioner 1 is stored is arranged in remote monitoring apparatus 2, it may be provided in an outdoor unit, an indoor unit, a remote controller, or the like of air-conditioner 1. Since a rate of communication through communication line 5 among the outdoor unit, the indoor unit, and the remote controller is low, it takes time until operation data arrives at network server 3 even when transmission again of operation data is requested. Therefore, storage device 21 is desirably provided in remote monitoring apparatus 2 capable of communicating with network server 3 at a high rate by means of wired LAN or wireless LAN.

Fig. 3 is a diagram for illustrating a procedure for starting collection of operation data when the remote monitoring apparatus is installed. Device manager 39 of network server 3 shown in Fig. 1 performs a function not to allow the user to control a remote monitoring apparatus used by another user. Therefore, at the time of start of use of remote monitoring apparatus 2, network server 3 should be notified of the fact that remote monitoring apparatus 2 is an apparatus possessed by the user. Therefore, the user or an installation worker transmits information specific to remote monitoring apparatus 2 from user terminal 4 to network server 3 at the time of installation of remote monitoring apparatus 2.

Any value that uniquely identifies the remote monitoring apparatus may be applicable as information specific to remote monitoring apparatus 2. For example, a serial number or combination of a serial number and a random number may be applicable as the specific information.

As shown in step S1 in Fig. 3, information specific to remote monitoring apparatus 2 is read from user terminal 4. For example, a two-dimensional bar code printed on a seal attached to remote monitoring apparatus 2 is read by camera 41 into user terminal 4. The user who purchased the remote monitoring apparatus may manually input information on a web screen or the like with the use of an input apparatus of user terminal 4. In step S2, user terminal 4 transmits a result of reading to network server 3.

In step S3, remote monitoring apparatus 2 transmits information specific thereto to network server 3. The specific information may be transmitted from remote monitoring apparatus 2 to network server 3 at the time of manufacturing of the apparatus or at the time point of connection of remote monitoring apparatus 2 to the Internet for the first time.

In step S4, network server 3 checks and verifies whether or not values of specific information transmitted from two locations are equal to each other.

In step S5, network server 3 sends a result of checking back to user terminal 4. When the result of checking of information specific to remote monitoring apparatus 2 against information transmitted from user terminal 4 indicates matching, network server 3 starts processing for obtaining the operating state from remote monitoring apparatus 2.

### (Suspension Function)

Since necessity of the air-conditioner is different depending on the seasons, the user may not use the air-conditioner in spring or fall. Continued operations even in such a case, of remote monitoring system 100 including remote monitoring apparatus 2 cost much.

In the present embodiment, collection of operation data by remote monitoring apparatus 2 can readily be suspended and resumed.

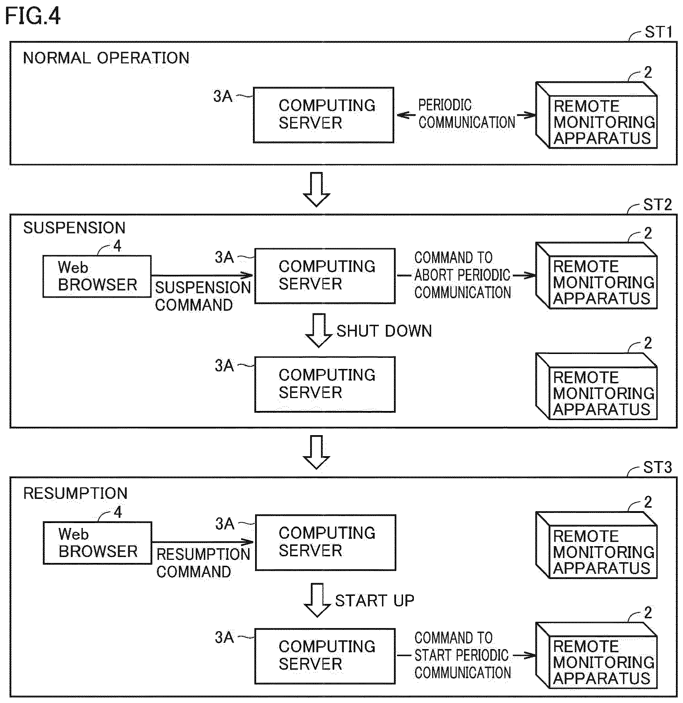

Fig. 4 is a diagram for illustrating suspension and resumption of collection of operation data. As shown in Fig. 3, a service to collect operation data is started in response to transmission of information specific to remote monitoring apparatus 2 from user terminal 4 to network server 3.

In a normal operation, as shown in a state ST1 in Fig. 4, remote monitoring apparatus 2 periodically communicates to transmit operation data collected from air-conditioner 1 to computing server 3A.

When the user desires suspension of data collection, as shown in a state ST2, a suspension command is transmitted from user terminal 4 to computing server 3A. Computing server 3A then shuts down and quits communication with remote monitoring apparatus 2. Thus, while communication is suspended, collection of operation data of air-conditioner 1 is suspended and the service to control or monitor air-conditioner 1 from user terminal 4 via computing server 3A is also suspended.

With adoption as file server 3B, of a server on a usage basis where fees are charged in accordance with a capacity of held data and an amount of read data, while the service is suspended, charging of new fees based on the amount of read data can be avoided. In general, since cost for reading data is higher than cost for holding data, suspension of the service is effective for reduction in communication cost.

By thus reducing communication, cost for maintaining remote monitoring can be suppressed.

When the user desires resumption of data collection, as shown in a state ST3, a resumption command is transmitted from user terminal 4 to computing server 3A. Computing server 3A is started up and transmits a command to start periodic communication to remote monitoring apparatus 2. As shown in state ST1, operation data of air-conditioner 1 is thus periodically collected.

In a conventional example, in order to suspend data collection, a communication contract between remote monitoring apparatus 2 and network server 3 should be cancelled and remote monitoring apparatus 2 should be retrieved from the user. In the present embodiment, charging of fees can be suppressed simply by transmission of a communication abort command, and resumption is also easy.

By thus suspending communication, an amount of communication and a consumed server resource can be minimized and cost can be suppressed while a database and files are kept held.

### (Function to Generate Refrigerant Circuit Diagram)

In the remote monitoring system shown in the present embodiment, for facilitated understanding of operation data of air-conditioner 1 by a user or a serviceperson, network server 3 generates a refrigerant circuit diagram.

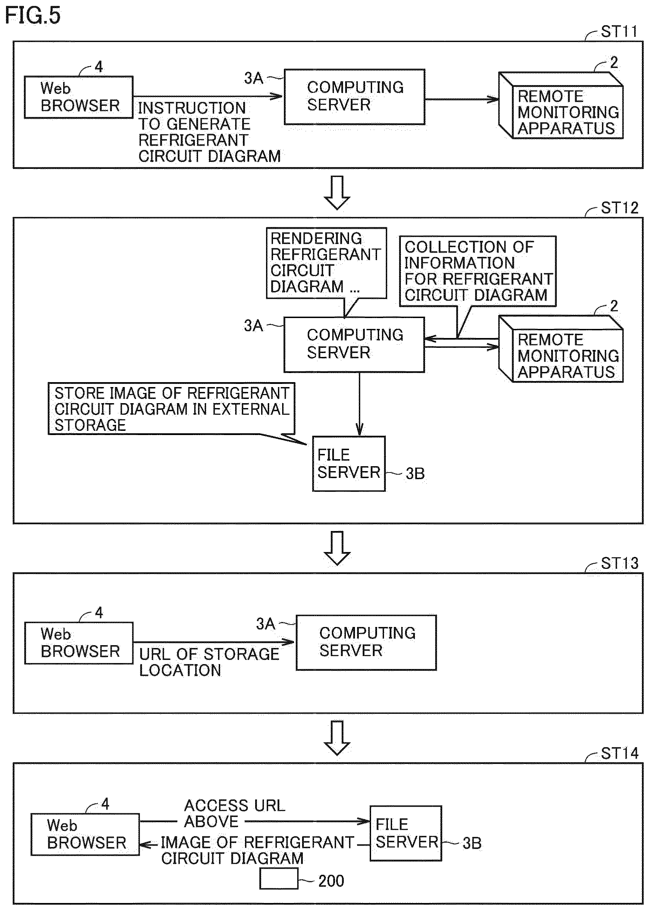

Fig. 5 is a diagram for illustrating generation and presentation of an image of a refrigerant circuit diagram.

As shown in a state ST11, the user or the serviceperson transmits a command to generate a refrigerant circuit diagram from user terminal 4 to computing server 3A. For example, the user requests generation of a refrigerant circuit diagram by clicking or tapping a button on a web browser.

As shown in a state ST12, computing server 3A communicates with remote monitoring apparatus 2 to obtain information such as a temperature or a pressure detected by a sensor in each portion of air-conditioner 1 for generating the refrigerant circuit diagram via remote monitoring apparatus 2. Computing server 3A then generates image data of the refrigerant circuit diagram based on this information. For example, image data is an image (a set of six GIF images or the like) or moving images of the refrigerant circuit diagram and it preferably allows visual observation of a moving state of refrigerant. Computing server 3A has generated image data stored in file server 3B.

As shown in a state ST13, computing server 3A transmits information (for example, a URL) indicating a location where the generated image is stored to user terminal 4 held by the user or the serviceperson.

As shown in a state ST14, the user or the serviceperson can access the location where the image is stored from user terminal 4 and look at a refrigerant circuit diagram 200 by reproducing the image data stored in file server 3B.

Though Fig. 5 shows an example where the user accesses the URL with the use of a browser to look at refrigerant circuit diagram 200, the user may watch refrigerant circuit diagram 200 by reproducing moving images by streaming. A specific example of refrigerant circuit diagram 200 will be shown below.

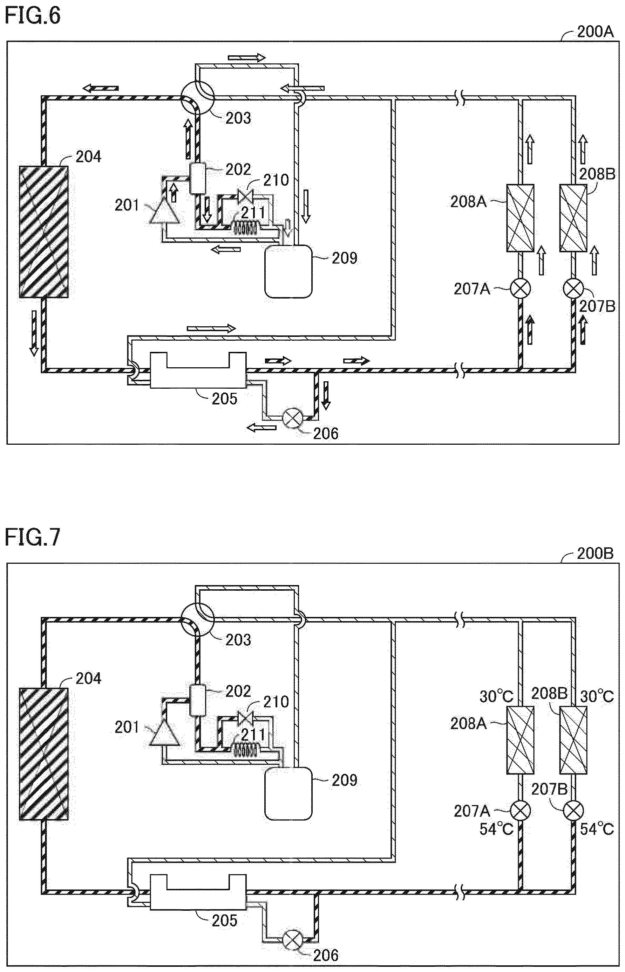

Fig. 6 is a diagram showing a first exemplary image of a generated refrigerant circuit diagram. A refrigerant circuit diagram 200A shown in Fig. 6 shows constituent elements of air-conditioner 1. Air-conditioner 1 includes as its constituent elements, a compressor 201, an oil separator 202, a four-way valve 203, an outdoor heat exchanger 204, an internal heat exchanger 205, expansion valves 206, 207A, and 207B, indoor heat exchangers 208A and 208B, an accumulator 209, a solenoid valve 210, and a capillary tube 211.

Refrigerant circuit diagram 200A further shows refrigerant pipes through which constituent elements are connected to one another. Furthermore, an arrow showing a flow of refrigerant through the refrigerant pipes based on a result of detection by a not-shown sensor such as a pressure sensor and a flow rate sensor is shown, and the refrigerant pipes are shown in such a manner that a high pressure portion and a low pressure portion are distinguished from each other. For example, in an image, the high pressure portion may be colored red and the low pressure portion may be colored blue. In the case of the moving images, instead of the arrow, a bright point that moves in a direction of flow of refrigerant may be shown in the pipes.

As such refrigerant circuit diagram 200A is shown, the user or the serviceperson can readily understand at a glance, the flow or the temperature of refrigerant in air-conditioner 1.

Fig. 7 is a diagram showing a second exemplary image of a generated refrigerant circuit diagram. A refrigerant circuit diagram 200B shown in Fig. 7 also shows constituent elements of air-conditioner 1 similarly to refrigerant circuit diagram 200A shown in Fig. 6.

Though refrigerant circuit diagram 200B does not show the arrow showing the flow of refrigerant, a temperature detected by the sensor is shown with a numerical value. Specifically, refrigerant circuit diagram 200B shows such numerical values as 54°C as the temperature at inlets of expansion valves 207A and 207B and 30°C as the temperature at outlets of indoor heat exchangers 208A and 208B. In addition, the refrigerant circuit diagram may directly show numerical values of a pressure and the number of rotations of a fan that are detected by sensors.

As shown in Fig. 7, as the refrigerant circuit diagram directly shows numerical values from the sensors, the serviceperson or the like can know a detailed cause of the failure from a remote location in diagnosis of the failure.

The serviceperson can remotely obtain the refrigerant circuit diagrams shown in Figs. 6 and 7 through network server 3. Conventionally, the serviceperson has had to remove an exterior of an outdoor unit or an indoor unit and to use a personal computer, a tablet, or the like in which an application for generation of the refrigerant circuit diagram has been installed to view the refrigerant circuit diagram. In this case, the serviceperson has to visit the site, and depending on a location where the air-conditioner is installed, works require much time and efforts.

According to the remote monitoring system in the present embodiment, the refrigerant circuit diagram showing operation data in an easy-to-understand manner can be obtained from a remote location. Thus, it is not necessary to visit the site for periodic diagnosis, and remote identification of a failed component based on the refrigerant circuit diagram and preparation of a replacement part on the first visit can be expected.

Since the refrigerant circuit diagram does not have to be generated from operation data in user terminal 4 and the refrigerant circuit diagram is provided as an image, data is easily handled on the user terminal without skewing of a layout. There is also an advantage in that an algorithm for generating the refrigerant circuit diagram does not have to be published to a developer of application software of user terminal 4.

Though the low pressure and the high pressure in the refrigerant circuit can visually be observed based on a color or the like in the present embodiment, any manner of representation of the difference in pressure is applicable. Though the direction of flow of refrigerant can visually be recognized based on the arrow in the refrigerant circuit diagram in the present embodiment, any manner of representation of the flow is applicable.

### (Function to Transmit Operation Data)

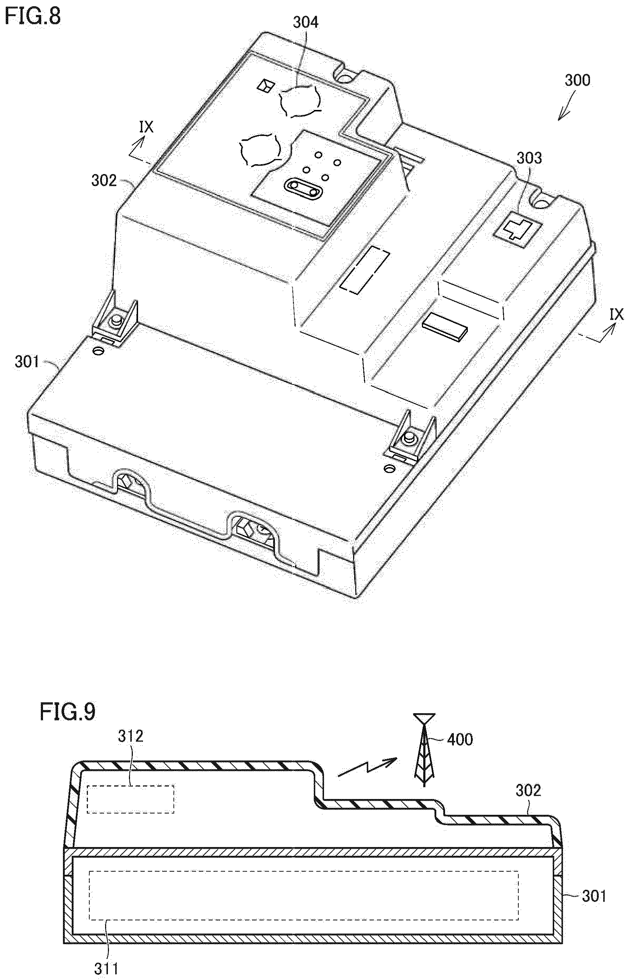

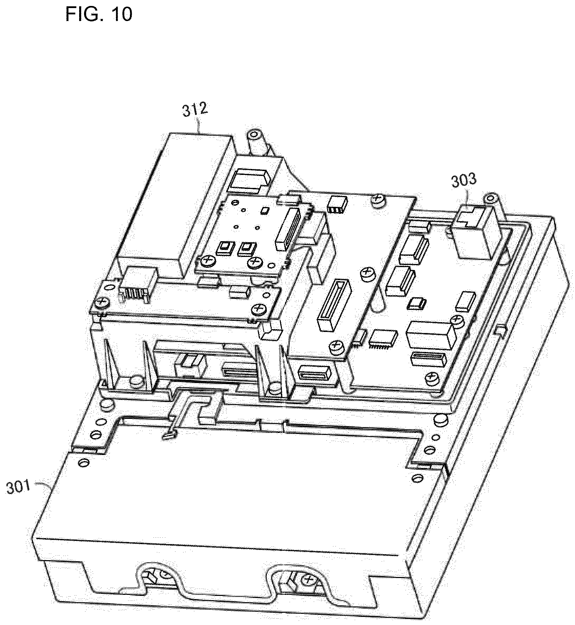

Fig. 8 is a perspective view showing an appearance of the remote monitoring apparatus. Fig. 9 is a cross-sectional view along the IX-IX cross-section in Fig. 8. Fig. 10 is a perspective view showing an appearance after a resin cover is removed in Fig. 8.

A remote monitoring apparatus 300 representing a specific example of remote monitoring apparatus 2 will be described with reference to Figs. 8 to 10. Remote monitoring apparatus 300 includes a housing 301 made of metal, a cover 302 made of resin, a power supply related circuit 311, and a wireless communication module 312.

Power supply related circuit 311 is arranged in housing 301 made of the metal in consideration of heat resistant performance. Wireless communication module 312 is arranged on an outer side of housing 301 made of the metal and covered with cover 302 made of the resin.

Wireless communication module 312 is capable of wirelessly communicating with a base station 400 of mobile phones. Since cover 302 made of the resin allows passage of radio waves therethrough, wireless communication module 312 is capable of wirelessly communicating even though it is covered with cover 302.

Remote monitoring apparatus 300 is an apparatus that contains wireless communication module 312 and monitors the air-conditioner. If wireless communication module 312 is accommodated in housing 301, radio waves are less likely to reach the wireless communication module because housing 301 is made of an iron-based metal. Therefore, a location where wireless communication module 312 is arranged is separated from a power supply unit.

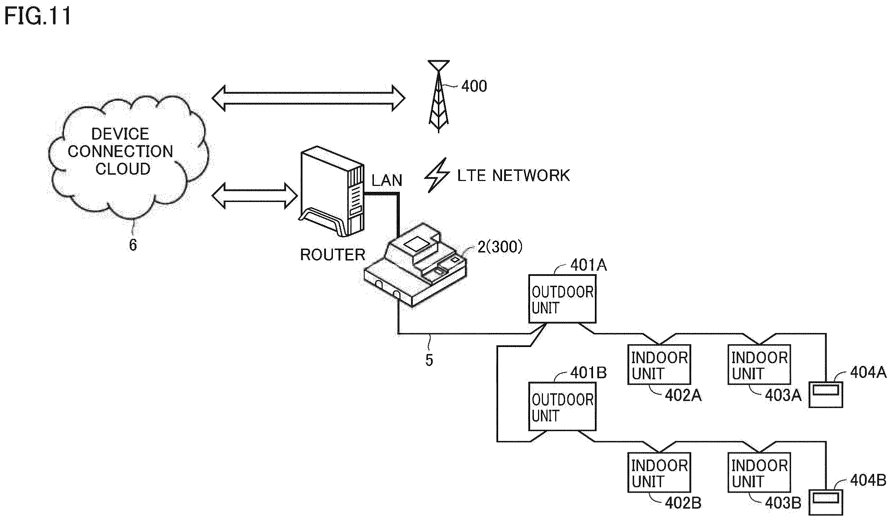

Fig. 11 is a diagram for illustrating a communication path in the remote monitoring system. Remote monitoring apparatus 300 is connected to a plurality of outdoor units 401A and 401B, a plurality of indoor units 402A, 403A, 402B, and 403B, and remote control panels 404A and 404B through communication line 5 for wired communication. For communication with network server 3, an interconnected remote monitoring system is configured to adapt to both of wired communication and wireless communication. When wired communication is used, a LAN cable is connected to a connector 303 and connection to the Internet 6 can be established via a router.

For wired communication, however, it takes time for wiring and setting. Therefore, wireless communication is often preferred. For wireless communication, wireless communication module 312 can be used to establish connection to the Internet 6 via base station 400.

In an environment where a communication condition is poor, an antenna cable can also be connected to wireless communication module 312. In preparation for such a case, the resin cover is provided with a knock-out portion 304 to allow passage of the antenna cable therethrough. In drawing out the antenna cable to the outside of remote monitoring apparatus 300, knock-out portion 304 is removed and a not-shown grommet part which is a separate part is attached.

According to the remote monitoring system in the present embodiment, since wireless communication module 312 is accommodated with the use of cover 302 made of the resin, radio waves are likely to reach wireless communication module 312. Since the antenna cable can also be connected by attachment of a grommet, wireless communication can be established to some extent even in an environment where a communication condition is poor. In addition, flexible and agile adaptation to a condition of installation of the remote monitoring apparatus can be made. Thus, data of the plurality of outdoor units 401A and 401B and the plurality of indoor units 402A, 403A, 402B, and 403B can be collected and the data can be transmitted wirelessly to the network server over the Internet 6.

### (Summary)

The present invention relates to remote monitoring system 100 to monitor an operating state of air-conditioner 1. Remote monitoring system 100 includes storage device 21 mounted on remote monitoring apparatus 2 to monitor air-conditioner 1, storage device 21 being configured to record therein the operating state for a first period (for example, five days) of air-conditioner 1, a communication control unit (CPU 20) mounted on remote monitoring apparatus 2, the communication control unit transmitting the operating state stored in storage device 21, and network server 3 configured to communicate with the communication control unit (CPU 20) over a network and to obtain the operating state from storage device 21. The communication control unit (CPU 20) is configured to transmit to network server 3, when there is no missing portion in the operating state obtained by network server 3 from storage device 21 until now, the operating state newly recorded in storage device 21 after previous transmission of the operating state. The communication control unit (CPU 20) is configured to transmit to network server 3, when there is a missing portion in the operating state obtained by network server 3 from storage device 21 until now, the operating state newly recorded after previous transmission of the operating state and the missing portion that remains in storage device21.

Though storage device 21 and the communication control unit (CPU 20) are arranged in remote monitoring apparatus 2 in Fig. 1, storage device 21 and the communication control unit (CPU 20) may be mounted on an outdoor unit, an indoor unit, a remote control panel, or the like of air-conditioner 1.

The communication control unit (CPU 20) is configured to transmit, in transmission of the newly recorded operating state to network server 3, difference data updated after previous transmission to network server 3.

As shown in Fig. 2, the communication control unit (CPU 20) is configured to transmit the operating state from storage device 21 to network server 3 at time intervals shorter than the first period (for example, five days).

As shown in Fig. 2, the communication control unit (CPU 20) is configured to periodically transmit the operating state from storage device 21 of remote monitoring apparatus 2 to network server 3 every second period (for example, ten minutes) shorter than the first period (for example, five days). When network server 3 fails in reception, in transmission of the operating state in a next second period, the communication control unit (CPU 20) transmits the operating state together with the missing portion.

As shown in Fig. 4, when network server 3 receives an operation halt command from a user, network server 3 stops processing for periodically obtaining the operating state from storage device 21 of remote monitoring apparatus 2. When network server 3 receives an operation resumption command from the user, network server 3 resumes the processing for periodically obtaining the operating state from storage device 21 of remote monitoring apparatus 2.

Preferably, the communication control unit (CPU 20) shown in Fig. 2 causes storage device 21 to store the operating state of air-conditioner 1 periodically sent from air-conditioner 1 as an operation data file. When there is no response from network server 3 at transmission timing to transmit the operation data file to network server 3, the communication control unit (CPU 20) causes storage device 21 to store failure in transmission as transmission failure history information, in association with the operation data file transmission of which failed. At next transmission timing, the communication control unit (CPU 20) refers to the recorded transmission failure history information to identify an operation data file that could not be transmitted and transmits the identified operation data file and a newly generated operation data file together to network server 3.

Network server 3 is configured such that remote monitoring apparatus 2 and user terminal 4 can be registered therein. When a result of checking of information specific to remote monitoring apparatus 2 against information transmitted from user terminal 4 indicates matching, network server 3 starts processing for obtaining the operating state from remote monitoring apparatus 2. Instead of or in addition to user terminal 4, an application server operated by a maintenance provider may similarly be registered in network server 3.

As shown in Fig. 3, remote monitoring apparatus 2 includes a one-dimensional or two-dimensional bar code in which the information specific to individual remote monitoring apparatus 2 is recorded. User terminal 4 includes camera 41 to shoot the bar code and operation portion 42 to operate remote monitoring apparatus 2. When a result of checking of the information specific to remote monitoring apparatus 2 against information indicated by the bar code transmitted from user terminal 4 indicates matching, network server 3 starts processing for obtaining the operating state from storage device 21 of remote monitoring apparatus 2. Without the use of camera 41, the user, the maintenance provider, or the like may directly input the specific information rather than the bar code with the use of the keyboard or the touch panel.

When the result of checking indicates matching, remote monitoring apparatus 2 changes the operating state of air-conditioner 1 based on an operation onto the operation portion of user terminal 4.

As shown in Figs. 8 to 10, remote monitoring apparatus 300 includes housing 301 made of metal, power supply related circuit 311 accommodated in housing 301, cover 302 attached to housing 301, cover 302 being made of resin, and wireless communication module 312 supplied with a power supply voltage from power supply related circuit 311, wireless communication module 312 transmitting data requested from network server 3. As shown in Fig. 9, wireless communication module 312 is arranged on an outer side of housing 301 and on an inner side of cover 302. Preferably, cover 302 made of the resin is provided with knock-out portion 304 to allow passage therethrough of an antenna cable that can be connected to wireless communication module 312.

As shown in Fig. 5, when network server 3 receives a command to request a refrigerant circuit diagram of air-conditioner 1 from a user, network server 3 collects information for creating the refrigerant circuit diagram from storage device 21 of remote monitoring apparatus 2, generates an image or moving images of the refrigerant circuit diagram based on the collected information, and stores the image or the moving images at a location accessible by the user. This location accessible by the user is file server 3B incorporated in network server 3.

A remote monitoring system to monitor an operating state of air-conditioner 1 according to another aspect of the present embodiment includes storage device 21 mounted on remote monitoring apparatus 2 to monitor the air-conditioner, in which an operating state is stored, and network server 3 configured to communicate with storage device 21 over a network and to obtain the operating state from storage device 21. Network server 3 is configured to collect information for creating a refrigerant circuit diagram from storage device 21 of remote monitoring apparatus 2, to generate an image or moving images of the refrigerant circuit diagram based on the collected information, and to store the image or the moving images at a location accessible from the user when network server 3 receives a command to request the refrigerant circuit diagram of air-conditioner 1 from a user. Storage device 21 may be mounted on an outdoor unit, an indoor unit, a remote control panel, or the like of air-conditioner 1.

It should be understood that the embodiments disclosed herein are illustrative and non-restrictive in every respect. The scope of the present invention is defined by the appended claims and is intended to include any modifications within the scope of the appended claims.

### REFERENCE SIGNS LIST

1 air-conditioner; 2, 300 remote monitoring apparatus; 3 network server; 3A computing server; 3B file server; 4 user terminal; 5 communication line; 6, 6A, 6B the Internet; 21, 31 storage device; 22 air-conditioner connection portion; 23 communication unit; 25, 36 updating unit; 26 air-conditioning control unit; 27 data collector; 28 data receiver; 32 remote monitoring apparatus communication unit; 33 application communication unit; 34 air-conditioning controller; 35 air-conditioning maintenance unit; 37 trend data collector; 38 device registration unit; 39 device manager; 41 camera; 42 operation portion; 100 remote monitoring system; 200, 200A, 200B refrigerant circuit diagram; 201 compressor; 202 oil separator: 203 four-way valve; 204, 205, 208A, 208B heat exchanger; 206, 207A, 207B expansion valve; 209 accumulator; 210 solenoid valve; 211 capillary tube; 301 housing; 302 cover; 303 connector; 304 knock-out portion; 311 power supply related circuit; 312 wireless communication module; 400 base station; 401A, 401B outdoor unit; 402A, 402B, 403A, 403B indoor unit; 404A, 404B remote control panel

## Claims

1. A remote monitoring system (100) to monitor an operating state of an air-conditioner (1), the remote monitoring system (100) comprising:
a storage device (21) mounted on the air-conditioner (1) or a remote monitoring apparatus (2) to monitor the air-conditioner (1), the storage device (21) being configured to record the operating state for a first period of the air-conditioner (1);
a communication control unit (20) mounted on the air-conditioner (1) or the remote monitoring apparatus (2), the communication control unit (20) transmitting the operating state stored in the storage device (21); and
a server (3) configured to communicate with the communication control unit (20) over a network and to obtain the operating state from the storage device (21), wherein
**characterized in that** the communication control unit (20) is configured to
a) transmit to the server (3), when there is no missing portion in the operating state obtained by the server (3) from the storage device (21) until now, the operating state newly recorded in the storage device (21) after previous transmission of the operating state, and
b) transmit to the server (3), when there is a missing portion in the operating state obtained by the server (3) from the storage device (21) until now, the operating state newly recorded after previous transmission of the operating state and the missing portion that remains in the storage device (21).

2. The remote monitoring system according to claim 1, wherein
the communication control unit (20) is configured to transmit, in transmission of the newly recorded operating state to the server (3), difference data updated after previous transmission to the server (3).

3. The remote monitoring system according to claim 1, wherein
the communication control unit (20) is configured to transmit the operating state from the storage device (21) to the server (3) at time intervals shorter than the first period.

4. The remote monitoring system according to claim 1, wherein
the communication control unit (20) is configured to periodically transmit the operating state from the storage device (21) to the server (3) every second period shorter than the first period, and
when the server (3) fails in reception, in transmission of the operating state in a next second period, the communication control unit (20) transmits the operating state together with the missing portion.

5. The remote monitoring system according to claim 4, wherein
when the server (3) receives an operation halt command from a user, the server (3) stops processing for periodically obtaining the operating state from the storage device (21), and
when the server (3) receives an operation resumption command from the user, the server (3) resumes the processing for periodically obtaining the operating state from the storage device (21).

6. The remote monitoring system according to claim 1, wherein
the communication control unit (20) causes the storage device (21) to store the operating state of the air-conditioner (1) periodically sent from the air-conditioner (1) as an operation data file,
when there is no response from the server (3) at transmission timing to transmit the operation data file to the server (3), the communication control unit (20) causes the storage device (21) to store failure in transmission as transmission failure history information, in association with the operation data file transmission of which failed, and
at next transmission timing, the communication control unit (20) refers to the transmission failure history information to identify an operation data file that could not be transmitted and transmits the identified operation data file and a newly generated operation data file together.

7. The remote monitoring system according to claim 1, wherein
in the server (3), the remote monitoring apparatus (2) and a user terminal (4) can be registered, and
when a result of checking of information specific to the remote monitoring apparatus (2) against information transmitted from the user terminal (4) indicates matching, the server (3) starts processing for obtaining the operating state from the remote monitoring apparatus (2).

8. The remote monitoring system according to claim 7, wherein
the remote monitoring apparatus (2) includes a one-dimensional or two-dimensional bar code in which the information specific to an individual remote monitoring apparatus (2) is recorded,
the user terminal (4) includes a camera (41) to shoot the bar code and an operation portion (42) to operate the remote monitoring apparatus (2), and
when a result of checking of the information specific to the remote monitoring apparatus (2) against information indicated by the bar code and transmitted from the user terminal (4) indicates matching, the server (3) starts processing for obtaining the operating state from the storage device (21).

9. The remote monitoring system according to claim 8, wherein
when the result of checking indicates matching, the remote monitoring apparatus (2) changes the operating state of the air-conditioner (1) based on an operation onto the operation portion of the user terminal (4).

10. The remote monitoring system according to claim 1, wherein
the remote monitoring apparatus includes
a housing (301) made of metal,
a power supply related circuit (311) accommodated in the housing (301),
a cover (302) attached to the housing (301), the cover (302) being made of resin, and
a wireless communication module (312) supplied with a power supply voltage from the power supply related circuit (311), the wireless communication module (312) transmitting data requested from the server (3), and
the wireless communication module (312) is arranged on an outer side of the housing (301) and on an inner side of the cover (302).

11. The remote monitoring system according to claim 10, wherein
the cover (302) made of the resin is provided with a knock-out portion (304) to allow passage of an antenna cable that can be connected to the wireless communication module (312).

12. The remote monitoring system according to claim 1, wherein
the server (3) is configured to collect information for creating a refrigerant circuit diagram from the storage device (21), to generate an image or moving images of the refrigerant circuit diagram based on the collected information, and to store the image or the moving images at a location accessible by a user, when the server (3) receives a command to request the refrigerant circuit diagram of the air-conditioner (1) from the user.

13. A remote monitoring method of monitoring an operating state of an air-conditioner (1), the remote monitoring method comprising:
recording the operating state for a first period of the air-conditioner in a storage device (21) mounted on the air-conditioner (1) or a remote monitoring apparatus (2) to monitor the air-conditioner (1); and
transmitting to a server (3) over a network, by a communication control unit (20) mounted on the air-conditioner (1) or the remote monitoring apparatus (2), the operating state stored in the storage device (21), wherein
**characterized in that** the transmitting the operating state to a server (3) includes
a) when there is no missing portion in the operating state obtained by the server (3) from the storage device (21) until now, transmitting the operating state newly recorded in the storage device (21) after previous transmission of the operating state to the server (3), and
b) when there is a missing portion in the operating state obtained by the server (3) from the storage device (21) until now, transmitting the operating state newly recorded after previous obtainment of the operating state and the missing portion that remains in the storage device (21) to the server (3).

## Patentansprüche

1. Fernüberwachungssystem (100), um einen Betriebszustand einer Klimaanlage (1) zu überwachen, das Fernüberwachungssystem (100) umfassend:
eine Speichervorrichtung (21), die an der Klimaanlage (1) oder einer Fernüberwachungseinrichtung (2) angebracht ist, um die Klimaanlage (1) zu überwachen, wobei die Speichervorrichtung (21) konfiguriert ist, um den Betriebszustand der Klimaanlage (1) für eine erste Periode aufzuzeichnen;
eine Kommunikationssteuereinheit (20), die an der Klimaanlage (1) oder der Fernüberwachungseinrichtung (2) angebracht ist, wobei die Kommunikationssteuereinheit (20) den Betriebszustand, der in der Speichervorrichtung (21) gespeichert ist, übermittelt; und
einen Server (3), der konfiguriert ist, um über ein Netzwerk mit der Kommunikationssteuereinheit (20) zu kommunizieren und den Betriebszustand von der Speichervorrichtung (21) zu erhalten, wobei
**dadurch gekennzeichnet, dass** die Kommunikationssteuereinheit (20) konfiguriert ist zum
a) Übermitteln, an den Server (3), wenn in dem Betriebszustand, der durch den Server (3) bisher von der Speichervorrichtung (21) erhalten wurde, kein Teil fehlt, des Betriebszustands, der in der Speichervorrichtung (21) nach der vorherigen Übermittlung des Betriebszustands neu aufgezeichnet wurde, und
b) Übermitteln, an den Server (3), wenn ein Teil des Betriebszustands fehlt, der durch den Server (3) bisher von der Speichervorrichtung (21) erhalten wurde, des Betriebszustands, der nach der vorherigen Übermittlung des Betriebszustands neu aufgezeichnet wurde, und des fehlenden Teils, der in der Speichervorrichtung (21) bleibt.

2. Fernüberwachungssystem nach Anspruch 1, wobei
die Kommunikationssteuereinheit (20) konfiguriert ist, um bei der Übermittlung des neu aufgezeichneten Betriebszustands an den Server (3) Differenzdaten zu übermitteln, die seit der vorherigen Übermittlung an den Server (3) aktualisiert wurden.

3. Fernüberwachungssystem nach Anspruch 1, wobei
die Kommunikationssteuereinheit (20) konfiguriert ist, um den Betriebszustand von der Speichervorrichtung (21) an den Server (3) in kürzeren Zeitabständen als der ersten Periode zu übermitteln.

4. Fernüberwachungssystem nach Anspruch 1, wobei
die Kommunikationssteuereinheit (20) konfiguriert ist, um den Betriebszustand von der Speichervorrichtung (21) in jeder zweiten Periode, die kürzer als die erste Periode ist, an den Server (3) periodisch zu übermitteln, und
wenn der Server (3) bei einem Empfang bei der Übermittlung des Betriebszustands in einer nächsten zweiten Periode ausfällt, die Kommunikationssteuereinheit (20) den Betriebszustand zusammen mit dem fehlenden Teil übermittelt.

5. Fernüberwachungssystem nach Anspruch 4, wobei
wenn der Server (3) von einem Benutzer einen Befehl zum Anhalten des Betriebs empfängt, der Server (3) ein Verarbeiten unterbricht, zum periodischen Erhalten des Betriebszustands von der Speichervorrichtung (21), und
wenn der Server (3) von dem Benutzer einen Befehl für eine Wiederaufnahme des Betriebs empfängt, der Server (3) das Verarbeiten wiederaufnimmt, zum periodischen Erhalten des Betriebszustands von der Speichervorrichtung (21).

6. Fernüberwachungssystem nach Anspruch 1, wobei
die Kommunikationssteuereinheit (20) die Speichervorrichtung (21) veranlasst, den Betriebszustand der Klimaanlage (1), der von der Klimaanlage (1) periodisch gesendet wird, als eine Betriebsdatendatei zu speichern,
wenn zum Übermittlungszeitpunkt keine Antwort von dem Server (3) erfolgt, um die Betriebsdatendatei an den Server (3) zu übermitteln, die Kommunikationssteuereinheit (20) die Speichervorrichtung (21) veranlasst, einen Übermittlungsfehler als Übermittlungsfehlerhistorieninformationen in Verbindung mit der fehlgeschlagenen Übermittlung der Betriebsdatendatei zu speichern, und
zum nächsten Übermittlungszeitpunkt die Kommunikationssteuereinheit (20) auf die Übermittlungsfehlerhistorieninformationen zurückgreift, um eine Betriebsdatendatei, die nicht übermittelt werden konnte, zu identifizieren, und die identifizierte Betriebsdatendatei zusammen mit einer neu erzeugten Betriebsdatendatei übermittelt.

7. Fernüberwachungssystem nach Anspruch 1, wobei
die Fernüberwachungseinrichtung (2) und ein Benutzerendgerät (4) auf dem Server (3) registriert werden können, und
wenn ein Ergebnis eines Abgleichs von Informationen, die für die Fernüberwachungseinrichtung (2) spezifisch sind, mit den von dem Benutzerendgerät (4) übermittelten Informationen eine Übereinstimmung anzeigt, der Server (3) mit dem Verarbeiten zum Erhalten des Betriebszustands von der Fernüberwachungseinrichtung (2) beginnt.

8. Fernüberwachungssystem nach Anspruch 7, wobei
die Fernüberwachungseinrichtung (2) einen eindimensionalen oder zweidimensionalen Barcode einschließt, in dem die Informationen, die für eine individuelle Fernüberwachungseinrichtung (2) spezifisch sind, aufgezeichnet sind,
das Benutzerendgerät (4) eine Kamera (41), um den Barcode aufzunehmen, und einen Bedienteil (42) einschließt, um die Fernüberwachungseinrichtung (2) zu bedienen, und
wenn ein Ergebnis des Abgleichs der Informationen, die für die Fernüberwachungseinrichtung (2) spezifisch sind, mit Informationen, die durch den Barcode angezeigt werden und von dem Benutzerendgerät (4) übermittelt werden, die Übereinstimmung anzeigt, der Server (3) mit dem Verarbeiten zum Erhalten des Betriebszustands von der Speichervorrichtung (21) beginnt.

9. Fernüberwachungssystem nach Anspruch 8, wobei
wenn das Ergebnis des Abgleichs die Übereinstimmung anzeigt, die Fernüberwachungseinrichtung (2) den Betriebszustand der Klimaanlage (1) basierend auf einer Operation auf dem Bedienteil des Benutzerendgeräts (4) ändert.

10. Fernüberwachungssystem nach Anspruch 1, wobei
die Fernüberwachungseinrichtung einschließt
ein Gehäuse (301), das aus Metall hergestellt ist,
einen zugehörigen Stromversorgungskreis (311), der in dem Gehäuse (301) untergebracht ist,
eine Abdeckung (302), die an dem Gehäuse (301) befestigt ist, wobei die Abdeckung (302) aus Harz hergestellt ist, und
ein Drahtloskommunikationsmodul (312), das von dem zugehörigen Stromversorgungskreis (311) mit einer Versorgungsspannung versorgt wird, wobei das Drahtloskommunikationsmodul (312) von dem Server (3) angeforderte Daten übermittelt, und
das Drahtloskommunikationsmodul (312) auf einer Außenseite des Gehäuses (301) und auf einer Innenseite der Abdeckung (302) angeordnet ist.

11. Fernüberwachungssystem nach Anspruch 10, wobei
die Abdeckung (302), die aus Harz hergestellt ist, mit einem Ausbrechteil (304) versehen ist, der einen Durchgang eines Antennenkabels ermöglicht, das mit dem Drahtloskommunikationsmodul (312) verbunden werden kann.

12. Fernüberwachungssystem nach Anspruch 1, wobei
der Server (3) konfiguriert ist, um Informationen zum Erstellen eines Kältemittelschaltdiagramms von der Speichervorrichtung (21) zu sammeln, um basierend auf den gesammelten Informationen ein Bild oder bewegte Bilder des Kältemittelschaltdiagramms zu erzeugen und um das Bild oder die bewegten Bilder an einem für einen Benutzer zugänglichen Ort zu speichern, wenn der Server (3) von dem Benutzer einen Befehl empfängt, das Kältemittelschaltdiagramm der Klimaanlage (1) anzufordern.

13. Fernüberwachungsverfahren zum Überwachen eines Betriebszustands einer Klimaanlage (1), das Fernüberwachungsverfahren umfassend:
Aufzeichnen des Betriebszustands der Klimaanlage für eine erste Periode in einer Speichervorrichtung (21), die an der Klimaanlage (1) angebracht ist, oder in einer Fernüberwachungseinrichtung (2), um die Klimaanlage (1) zu überwachen; und
Übermitteln, an einen Server (3) über ein Netzwerk, durch eine Kommunikationssteuereinheit (20), die an der Klimaanlage (1) oder der Fernüberwachungseinrichtung (2) angebracht ist, des Betriebszustands, der in der Speichervorrichtung (21) gespeichert ist, wobei
**dadurch gekennzeichnet, dass** das Übermitteln des Betriebszustands an einen Server (3) einschließt
a) wenn in dem Betriebszustand, der durch den Server (3) bisher von der Speichervorrichtung (21) erhalten wurde, kein Teil fehlt, Übermitteln des Betriebszustands, der in der Speichervorrichtung (21) nach der vorherigen Übermittlung des Betriebszustands neu aufgezeichnet wurde, an den Server (3), und
b) wenn ein Teil des Betriebszustands fehlt, der durch den Server (3) bisher von der Speichervorrichtung (21) erhalten wurde, Übermitteln des Betriebszustands, der nach dem vorherigen Erhalten des Betriebszustands neu aufgezeichnet wurde, und des fehlenden Teils, der in der Speichervorrichtung (21) bleibt, an den Server (3).

## Revendications

1. Système de surveillance à distance (100) permettant de surveiller l'état de fonctionnement d'un climatiseur (1), le système de surveillance à distance (100) comprenant :
un dispositif de stockage (21) monté sur le climatiseur (1) ou un appareil de surveillance à distance (2) pour surveiller le climatiseur (1), le dispositif de stockage (21) étant configuré pour enregistrer l'état de fonctionnement du climatiseur (1) pendant une première période ;
une unité de commande de communication (20) montée sur le climatiseur (1) ou l'appareil de surveillance à distance (2), l'unité de commande de communication (20) transmettant l'état de fonctionnement stocké dans le dispositif de stockage (21) ; et
un serveur (3) configuré pour communiquer avec l'unité de commande de communication (20) sur un réseau et pour obtenir l'état de fonctionnement du dispositif de stockage (21), dans lequel
**caractérisé en ce que** l'unité de commande de communication (20) est configurée pour
a) transmettre au serveur (3), lorsqu'il n'y a pas de partie manquante dans l'état de fonctionnement obtenu par le serveur (3) à partir du dispositif de stockage (21) jusqu'à présent, l'état de fonctionnement nouvellement enregistré dans le dispositif de stockage (21) après la transmission précédente de l'état de fonctionnement, et
b) transmettre au serveur (3), lorsqu'il manque une partie de l'état de fonctionnement obtenu par le serveur (3) à partir du dispositif de stockage (21) jusqu'à présent, l'état de fonctionnement nouvellement enregistré après la transmission précédente de l'état de fonctionnement et la partie manquante qui reste dans le dispositif de stockage (21).

2. Système de surveillance à distance selon la revendication 1, dans lequel
l'unité de commande de communication (20) est configurée pour transmettre au serveur (3), lors de la transmission de l'état de fonctionnement nouvellement enregistré, les données de différence mises à jour après la transmission précédente au serveur (3).

3. Système de surveillance à distance selon la revendication 1, dans lequel
l'unité de commande de communication (20) est configurée pour transmettre l'état de fonctionnement du dispositif de stockage (21) au serveur (3) à des intervalles de temps plus courts que la première période.

4. Système de surveillance à distance selon la revendication 1, dans lequel
l'unité de commande de communication (20) est configurée pour transmettre périodiquement l'état de fonctionnement du dispositif de stockage (21) au serveur (3) à chaque seconde période inférieure à la première période, et
lorsque le serveur (3) ne reçoit pas, lors de la transmission de l'état de fonctionnement au cours d'une seconde période suivante, l'unité de commande des communications (20) transmet l'état de fonctionnement avec la partie manquante.

5. Système de surveillance à distance selon la revendication 4, dans lequel
lorsque le serveur (3) reçoit une commande d'arrêt d'opération de la part d'un utilisateur, le serveur (3) arrête le traitement pour obtenir périodiquement l'état de fonctionnement du dispositif de stockage (21), et
lorsque le serveur (3) reçoit une commande de reprise des opérations de la part de l'utilisateur, le serveur (3) reprend le traitement pour obtenir périodiquement l'état de fonctionnement du dispositif de stockage (21).

6. Système de surveillance à distance selon la revendication 1, dans lequel
l'unité de commande de communication (20) amène le dispositif de stockage (21) à stocker l'état de fonctionnement du climatiseur (1) envoyé périodiquement par le climatiseur (1) sous la forme d'un fichier de données de fonctionnement,
en l'absence de réponse du serveur (3) au moment de la transmission du fichier de données de fonctionnement au serveur (3), l'unité de commande de communication (20) amène le dispositif de stockage (21) à stocker l'échec de la transmission en tant qu'informations sur l'historique de l'échec de la transmission, en association avec le fichier de données de fonctionnement dont la transmission a échoué, et
au moment de la transmission suivante, l'unité de commande de la communication (20) se réfère aux informations relatives à l'historique des échecs de transmission pour identifier un fichier de données de fonctionnement qui n'a pas pu être transmis et transmet le fichier de données de fonctionnement identifié et un fichier de données de fonctionnement nouvellement généré ensemble.

7. Système de surveillance à distance selon la revendication 1, dans lequel
dans le serveur (3), l'appareil de surveillance à distance (2) et un terminal d'utilisateur (4) peuvent être enregistrés, et
lorsque le résultat de la vérification des informations propres à l'appareil de surveillance à distance (2) par rapport aux informations transmises par le terminal utilisateur (4) indique une concordance, le serveur (3) lance le traitement permettant d'obtenir l'état de fonctionnement de l'appareil de surveillance à distance (2).

8. Système de surveillance à distance selon la revendication 7, dans lequel
l'appareil de surveillance à distance (2) comporte un code-barres unidimensionnel ou bidimensionnel dans lequel sont enregistrées les informations propres à un appareil de surveillance à distance individuel (2),
le terminal utilisateur (4) comporte une caméra (41) pour photographier le code à barres et une partie fonctionnelle (42) pour faire fonctionner l'appareil de surveillance à distance (2), et
lorsque le résultat de la vérification des informations propres à l'appareil de surveillance à distance (2) par rapport aux informations indiquées par le code à barres et transmises par le terminal utilisateur (4) indique une concordance, le serveur (3) lance le traitement pour obtenir l'état de fonctionnement à partir du dispositif de stockage (21).

9. Système de surveillance à distance selon la revendication 8, dans lequel
lorsque le résultat de la vérification indique une correspondance, l'appareil de surveillance à distance (2) modifie l'état de fonctionnement du climatiseur (1) sur la base d'une opération sur la partie fonctionnelle du terminal utilisateur (4).

10. Système de surveillance à distance selon la revendication 1, dans lequel
l'appareil de surveillance à distance comporte
un boîtier (301) en métal,
un circuit lié à l'alimentation électrique (311) logé dans le boîtier (301),
un couvercle (302) fixé au boîtier (301), le couvercle (302) étant en résine, et
un module de communication sans fil (312) alimenté par une tension d'alimentation provenant du circuit d'alimentation (311), le module de communication sans fil (312) transmettant les données demandées au serveur (3), et
le module de communication sans fil (312) est disposé sur une face extérieure du boîtier (301) et sur une face intérieure du couvercle (302).

11. Système de surveillance à distance selon la revendication 10, dans lequel
le couvercle (302) en résine est pourvu d'une partie défonçable (304) pour permettre le passage d'un câble d'antenne qui peut être connecté au module de communication sans fil (312).

12. Système de surveillance à distance selon la revendication 1, dans lequel
le serveur (3) est configuré pour collecter les informations nécessaires à la création d'un schéma de circuit de réfrigération à partir du dispositif de stockage (21), pour générer une image ou des images animées du schéma de circuit de réfrigération sur la base des informations collectées, et pour stocker l'image ou les images animées à un emplacement accessible par un utilisateur, lorsque le serveur (3) reçoit de l'utilisateur une commande de demande du schéma de circuit de réfrigération du climatiseur (1).

13. Procédé de surveillance à distance d'un état de fonctionnement d'un climatiseur (1), le procédé de surveillance à distance comprenant :
l'enregistrement de l'état de fonctionnement du climatiseur pendant une première période dans un dispositif de stockage (21) monté sur le climatiseur (1) ou sur un appareil de surveillance à distance (2) pour surveiller le climatiseur (1) ; et
la transmission à un serveur (3) par l'intermédiaire d'un réseau, par une unité de commande de communication (20) montée sur le climatiseur (1) ou l'appareil de surveillance à distance (2), l'état de fonctionnement stocké dans le dispositif de stockage (21), dans lequel
**caractérisé en ce que** la transmission de l'état de fonctionnement à un serveur (3) comporte
a) lorsqu'il n'y a pas de partie manquante dans l'état de fonctionnement obtenu par le serveur (3) à partir du dispositif de stockage (21) jusqu'à présent, la transmission de l'état de fonctionnement nouvellement enregistré dans le dispositif de stockage (21) après la transmission précédente de l'état de fonctionnement au serveur (3), et
b) lorsqu'il manque une partie de l'état de fonctionnement obtenu par le serveur (3) à partir du dispositif de stockage (21)jusqu'à présent, la transmission au serveur (3) de l'état de fonctionnement nouvellement enregistré après l'obtention précédente de l'état de fonctionnement et la partie manquante qui reste dans le dispositif de stockage (21).
